(19) Europäisches Patentamt
European Patent Office
Office européen des brevets

(11) **EP 4 261 632 A1**

(12) **EUROPEAN PATENT APPLICATION**
published in accordance with Art. 153(4) EPC

(43) Date of publication:
**18.10.2023 Bulletin 2023/42**

(51) International Patent Classification (IPC):
*G05B 19/418* (2006.01)　　*G06Q 10/04* (2023.01)

(21) Application number: **20964847.6**

(52) Cooperative Patent Classification (CPC):
**B01D 53/04; B01D 53/14; C02F 1/00;
G05B 19/418; G06Q 10/04**

(22) Date of filing: **17.12.2020**

(86) International application number:
**PCT/CN2020/137063**

(87) International publication number:
**WO 2022/120915 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.12.2020　CN 202011457934**

(71) Applicants:
• **Mitsubishi Electric (China) Co., Ltd.
Beijing 100027 (CN)**
• **MITSUBISHI ELECTRIC CORPORATION
Chiyoda-ku
Tokyo 100-8310 (JP)**

(72) Inventors:
• **XUE, Binjie
Shanghai 200336 (CN)**
• **REN, Yinji
Shanghai 200336 (CN)**
• **NI, Yueyong
Shanghai 200336 (CN)**
• **DONG, Surui
Shanghai 200336 (CN)**
• **SATO, Takaomi
Tokyo 100-8310 (JP)**

(74) Representative: **Diehl & Partner
Patent- und Rechtsanwaltskanzlei mbB
Erika-Mann-Straße 9
80636 München (DE)**

(54) **ENVIRONMENT-FRIENDLY DEVICE CONTROL APPARATUS, PRODUCTION PLAN OPTIMIZING SYSTEM AND METHOD, AND COMPUTER-READABLE MEDIUM**

(57)　The present invention provides an environmental protection device control apparatus, a production plan optimization system, method, and a computer-readable medium, which can improve operating efficiency of an environmental protection device and reduce energy consumption of the environmental protection device on the premise of reaching environmental protection standards, and can use operation of the environmental protection device as one of elements of formulating a production plan. The environmental protection device control apparatus comprises: an environmental parameter obtaining unit to obtain environmental parameters in an operation process of an environmental protection device; an adjustment unit to adjust the environmental protection device; and a control unit to control the adjustment unit based on the environmental parameters obtained by the environmental parameter obtaining unit, such that an operation cost of the environmental protection device is reduced while the environmental parameters meet minimum environmental protection requirements.

FIG. 4

EP 4 261 632 A1

**Description**

**Technical Field**

The present invention relates to an environmental protection device control apparatus, a production plan optimization system with the environmental protection device control apparatus, a production plan optimization method, and a computer-readable medium storing a program that results in execution of the production plan optimization method, and in particular to a system and method for optimizing an operation mode of an environmental protection device in a factory equipped with the environmental protection device and a production plan of the entire factory.

**Background**

In an automated production process of a factory, in order to minimize an impact on environment, an environmental protection device is generally equipped to treat pollutants generated in the production process. Specific examples of the environmental protection device include, for example, a VOC (Volatile Organic Compound) treatment device for treatment of VOC generated in the production process of electronic components due to the volatilization of resins and adhesives or the like, and a water recycling device for water treatment and recycling of industrial wastewater generated in the production process, etc.

An existing environmental protection device is technically capable of the following function: automatically controlling the switching on and off according to generation of pollutants in the production process. This way, it can be ensured that the production process of the factory meets the requirements of environmental quality standards and pollutant discharge standards or the like.

**Summary**

Problems to be solved by the present invention

However, in the past, for the purpose of making production environment stable and up to standards, as long as the generation of pollutants was detected, the corresponding environmental protection device would enter a full-load operation state, thus the environmental protection device was in a full-load operation state for a long time, which would consume a large amount of energy and increase a cost of treating pollutants such as wastewater and exhaust gas or the like, resulting in an increase in production costs.

In addition, the operation of the existing environmental protection device is isolated from the operation of the entire factory, and the environmental protection device can only respond passively when pollutants are generated, and cannot predict the discharge and treatment of subsequent pollutants according to the production plan, thus further exacerbating the problem of promoting the environmental protection device to operate at full-load for a long time in order to avoid a risk of not reaching environmental standards.

Further, in the past, the operation control of the environmental protection device was generally independent of arrangement of the production plan, thus data generated by the operation of the environmental protection device was hardly recorded, or even if it was recorded, the data was not used as a basis for production plan decisions. As a result, the operation of the environmental protection device is not taken into account when formulating the production plan, so that it is impossible to obtain a production plan optimization scheme that can takes into account both productivity and environmental protection at a lower cost.

The present invention is completed in view of the above problems, with the aim to provide an environmental protection device control apparatus, a production plan optimization system equipped with the environmental protection device control apparatus, a production plan optimization method, and a computer-readable medium storing a program that results in execution of the production plan optimization method, which can improve operating efficiency of the environmental protection device and reduce energy consumption of the environmental protection device on the premise of reaching standards such as environmental quality standards and pollutant discharge standards or the like, and can use the operation of the environmental protection device as one of elements in formulating the production plan, so as to formulate an optimal production plan that can not only meet environmental protection requirements but also minimize the cost for different production requirements.

Technical solution to solve the technical problem

To solve the above problems, a first aspect of the present invention relates to an environmental protection device control apparatus comprising: an environmental parameter obtaining unit to obtain environmental parameters in an operation process of an environmental protection device; an adjustment unit to adjust the environmental protection device; and a control unit to control the adjustment unit based on the environmental parameters obtained by the environmental parameter obtaining unit, such that an operation cost of the environmental protection device is reduced while the environmental parameters meet minimum environmental protection requirements.

Further, in order to solve the above problems, a second aspect of the present invention relates to a production plan optimization system comprising: an environmental protection device control apparatus as described above in the first aspect of the present invention to control an environmental protection device according to a production plan such that environmental parameters meet minimum environmental protection requirements, and to obtain environmental protection device operation information from the environmental protection device; a production control apparatus to control a production device according to the production plan, and to obtain production-related information from the production device; and a production plan optimization apparatus to obtain production demand information, to obtain the production-related information from the production control apparatus, and to obtain the environmental protection device operation information from the environmental protection device control apparatus, and to generate a plurality of production plans corresponding to the production demand information based on the production-related information and the environmental protection device operation information, and to obtain a cost of each of the plurality of production plans, and then to select a production plan with a lowest cost of the production plan from the plurality of production plans as an optimal production plan, and to provide the optimal production plan to the environmental protection device control apparatus and the production control apparatus.

Further, in order to solve the above problems, a third aspect of the present invention relates to a production plan optimization method comprising: a learning step, during which to learn a relationship between production demand information and costs of a plurality of production plans corresponding to the production demand information based on production-related information obtained from a production control apparatus that controls a production device according to a production plan, environmental protection device operation information obtained from an environmental protection device control apparatus that controls an environmental protection device according to the production plan, and production demand information; and an optimal production plan determining step, during which to select a production plan with a lowest cost of the production plan from the plurality of production plans as an optimal production plan according to the production demand information based on a learning result of the learning step.

Further, in order to solve the above problems, a fourth aspect of the present invention relates to a computer-readable medium storing a program to execute the production plan optimization method as described above in the third aspect of the present invention.

Effect of the present invention

An environmental protection device control apparatus, a production plan optimization system with the environmental protection device control apparatus, a production plan optimization method, and a computer-readable medium storing a program that results in execution of the production plan optimization method that are involved in the present invention can improve operating efficiency of the environmental protection device and reduce energy consumption of the environmental protection device on the premise of reaching standards such as environmental quality standards and pollutant discharge standards or the like, and can use operation of the environmental protection device as one of elements of formulating a production plan, so as to formulate an optimal production plan that can not only meet environmental protection requirements but also minimize a cost for different production requirements.

**BRIEF DESCRIPTION OF DRAWINGS**

FIG. 1 is a block diagram for illustrating a structure of an environmental protection device control apparatus involved in implementation 1 of the present invention.

FIG. 2 is a schematic diagram representing a specific example of an environmental protection device control apparatus.

FIG. 3 is a schematic diagram representing another specific example of an environmental protection device control apparatus.

FIG. 4 is a block diagram for illustrating a structure of a production plan optimization system involved in implementation 2 of the present invention.

FIG. 5 is a block diagram for illustrating a structure of a production plan optimization apparatus in FIG. 4.

FIG. 6 is a flowchart for illustrating a production plan optimization method.

FIG. 7 is a flowchart for illustrating one embodiment of a learning step in FIG. 6.

FIG. 8 is a flowchart for illustrating another embodiment of a learning step in FIG. 6.

FIG. 9 is a block diagram for illustrating a structure of a production plan optimization system involved in implementation 3 of the present invention.

FIG. 10 is a block diagram for illustrating a structure of a production plan optimization apparatus in FIG. 9.

FIG. 11 is a diagram representing an example of supply device information involved in implementation 3.

FIG. 12 is a diagram representing an example of essential resource quantity information involved in implementation 3.

FIG. 13 is a diagram representing an example of expenditure item information involved in implementation 3.

FIG. 14 is a diagram representing an example of cost information involved in implementation 3.

FIG. 15 is a diagram representing an example of production evaluation index information involved in implementation 3.

**Detailed Description**

Implementation 1.

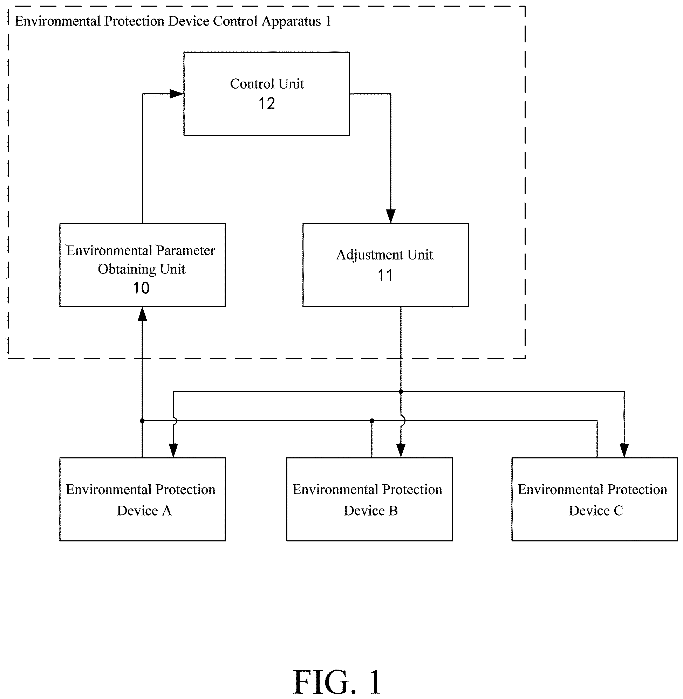

Hereinafter, an environmental protection device control apparatus involved in this implementation 1 is illustrated with reference to FIGS. 1 to 3.

FIG. 1 is a block diagram for illustrating a structure of an environmental protection device control apparatus 1 involved in this implementation 1. As shown in FIG. 1, the environmental protection device control apparatus 1 includes an environmental parameter obtaining unit 10, an adjustment unit 11, and a control unit 12.

The environmental parameter obtaining unit 10 is connected to a plurality of environmental protection devices A to C, respectively, and obtains environmental parameters from one or more locations of each environmental protection device A to C. The environmental parameters can be, for example, concentrations of harmful substances such as VOC, carbon oxides, sulfur oxides, or heavy metals or the like in industrial exhaust gases, or can be water quality parameters such as content of toxic and harmful substances such as heavy metals, radioactive substances, or chemical substances or the like in industrial wastewater. The environmental parameter obtaining unit 10 can, for example, detect environmental parameters in an operation process of each environmental protection device A to C through various existing detection means such as pollutant sensing apparatuses installed at the front, middle and rear ends of the environmental protection device.

The adjustment unit 11 is connected to the plurality of environmental protection devices A to C respectively, and adjusts the plurality of environmental protection devices A to C. The object to be adjusted can be, for example, the operating frequency of a water pump, a fan, a dosing apparatus, etc. that is capable of operating at variable frequencies and installed in each environmental protection device, or the operating hours of each environmental protection device, or the flow path of industrial water, etc. The adjustment unit 11 can, for example, adjust each environmental protection device A to C through various existing control means such as a converter and a solenoid valve controller or the like installed in the environmental protection device.

The control unit 12 is connected to the environmental parameter obtaining unit 10 and the adjustment unit 11 respectively, obtains the environmental parameters of each environmental protection device A to C from the environmental parameter obtaining unit 10 respectively, and controls the adjustment unit 11 based on the environmental parameters of each environmental protection device A to C respectively, so that the adjustment unit 11 adjusts the corresponding environmental protection device A to C respectively, so that the operation cost of each environmental protection device A to C is reduced as much as possible while the environmental parameters meet minimum environmental protection requirements. The so-called minimum environmental protection requirements, for example, refer to that VOC concentration in a purified gas reaches the local discharge standard, for example, below 100 ppm (this is only an example due to different environmental protection requirements of different industries) when the environmental parameter is the VOC concentration, and they refer to that water quality after water treatment reaches the local discharge standard or reaches a discharge standard formulated by an enterprise depending on its own situation when the environmental parameter is a water quality parameter. In addition, the so-called operation cost of each environmental protection device, for example, can include a cost of electricity of each environmental protection device, which can be obtained in the following way: calculating electricity consumption of the environmental protection device according to the operating frequency, operating hours, etc. of the environmental protection device, and multiplying the electricity consumption by a real-time electricity cost when the environmental protection device is operating. Further, the operation cost of each environmental protection device may also include other costs for operating the environmental protection device, such as a cost of electricity for water circulation of a recycled water treatment system, a cost for discarding filtered pollutants, and a cost for wastewater treatment of wastewater that cannot be recycled, etc.

In this implementation, an example of three environmental protection devices A to C is illustrated, but the number of environmental protection devices that can be detected by the environmental parameter unit 10 is not limited thereto. For example, the environmental parameters can be obtained from only one environmental protection device, or can be obtained from a plurality of environmental protection devices that are more than two environmental protection devices. Further, in the case that the environmental parameters are obtained from a plurality of environmental protection devices, the plurality of environmental protection devices may be the same type of environmental protection devices, or may be different types of environmental protection devices.

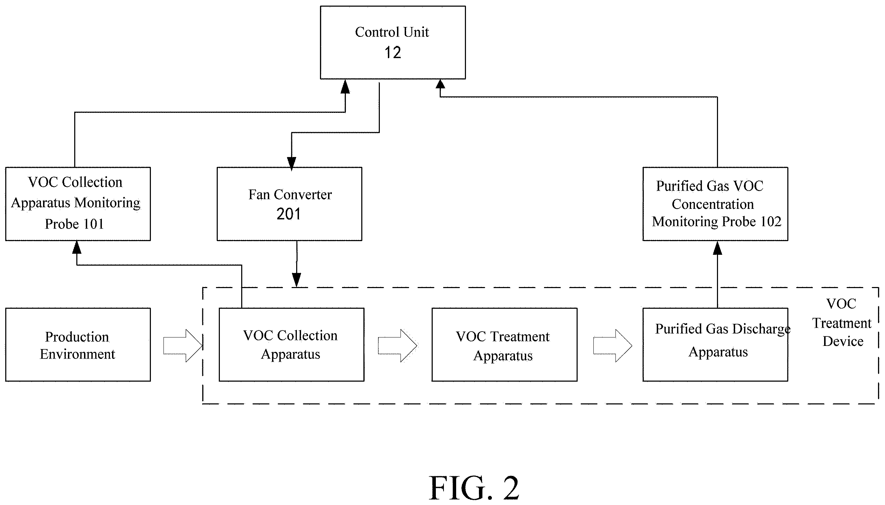

FIG. 2 is a schematic diagram representing a specific example of an environmental protection device control apparatus. As shown in the dashed box of FIG. 2, the environmental protection device is, for example, a VOC treatment device including a VOC collection apparatus, a VOC treatment apparatus, and a purified gas discharge apparatus, where the VOC treatment apparatus includes, for example, a spray tower and an activated carbon adsorption box that are not shown. The VOC treatment device treats VOC substances in the production environment.

VOC concentration monitoring probes including a VOC collection apparatus monitoring probe 101 and a purified gas VOC concentration monitoring probe 102 correspond to the environmental parameter obtaining unit of the present invention, and a converter including a fan converter 201 corresponds to the adjustment unit of the present invention. These VOC concentration monitoring probes and the inverter and the control unit 12together constitute the environmental protection device control apparatus of the present invention. In addition, only one fan converter 201 is illustrated here, but since the number and type of fans used in different VOC treatment processes in actual production may vary, a plurality of different converters can also be configured to control the operating frequency of these fans respectively.

A control mode of the VOC treatment device is described below.

The VOC collection apparatus monitoring probe 101 obtains the VOC concentration before VOC treatment, i.e., the VOC concentration at an inlet of the VOC collection apparatus, and uploads the VOC concentration to the control unit 12. The control unit 12 stores the VOC concentration as environmental protection device operation information and compares the VOC concentration with a predetermined VOC concentration threshold at the inlet, i.e., the minimum environmental protection requirement. When the VOC concentration is higher than the VOC concentration threshold at the inlet, the control unit 12 controls the fan converter 201 so that the fan converter 201 increases the operating frequency of a shop exhaust fan located at the inlet of the VOC collection apparatus. On the other hand, when the VOC concentration is lower than or equal to a production environment VOC concentration threshold, the control unit 12 controls the fan converter 201 so that the fan converter 201 decreases the operating frequency of the shop exhaust fan until it stops working. As a result, the operating energy consumption of the fan can be reduced as much as possible on the premise that the full collection of the VOC concentration in the production environment is ensured.

In addition, the purified gas VOC concentration monitoring probe 102 obtains the VOC concentration of the purified discharged gas in the purified gas discharge apparatus and uploads the VOC concentration to the control unit 12. The control unit 12 stores the VOC concentration as environmental protection device operation information and compares the VOC concentration with a predetermined purified gas VOC concentration threshold, i.e., the minimum environmental protection requirement. When the VOC concentration is higher than the purified gas VOC concentration threshold, the control unit 12 controls the fan converter 201 so that the fan converter 201 increases the operating frequency of each fan in the VOC treatment device. On the other hand, when the VOC concentration is lower than or equal to the purified gas VOC concentration threshold, the control unit 12 controls the fan converter 201 so that the fan converter 201 decreases the operating frequency of each fan in the VOC treatment device until it stops working. As a result, the operating energy consumption of the VOC treatment device can be reduced as much as possible on the premise that the VOC discharge reaching the standard is ensured.

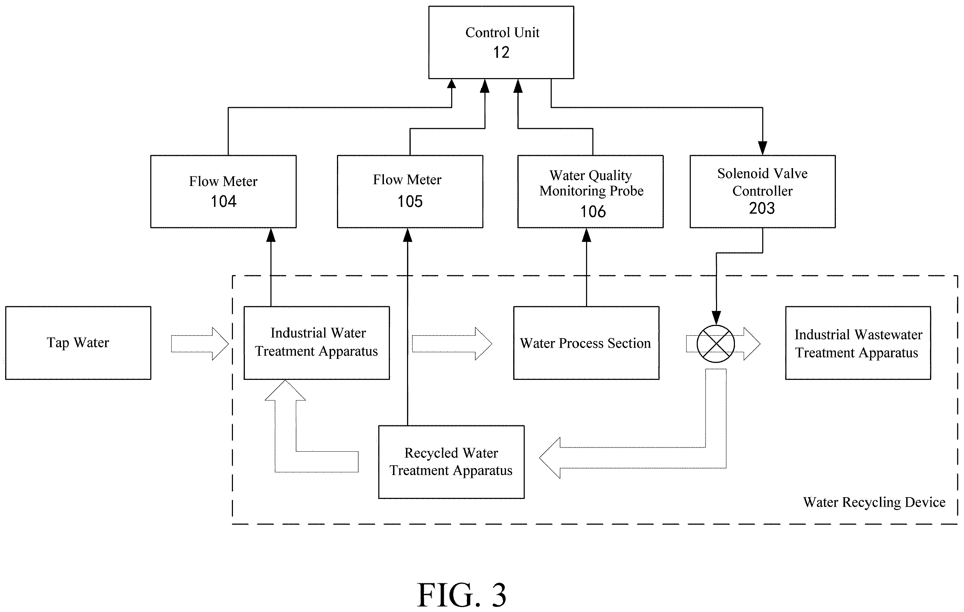

FIG. 3 is a schematic diagram representing another specific example of an environmental protection device control apparatus. As shown in the dashed box of FIG. 3, the environmental protection device is, for example, a water recycling device including an industrial water treatment apparatus, a water process section, an industrial wastewater treatment apparatus, and a recycled water treatment apparatus, where the industrial water treatment apparatus includes, for example, a sand filtering device, a reverse osmosis device, an Electrodeionization (EDI) device, etc. that are not shown, the water process section includes, for example, a degreasing device, a plurality of pure water washing devices, a silane washing device, etc. that are not shown, and the recycled water treatment apparatus includes, for example, an activated carbon device, a sand filtering device, etc. that are not shown. The water recycling device recycles the industrial wastewater.

Flow meters including a flow meter 104 and a flow meter 105 and a water quality monitoring probe 106 correspond to the environmental parameter obtaining unit of the present invention, and a solenoid valve controller 203 corresponds to the adjustment unit of the present invention. These flow meters, the water quality monitoring probe, the solenoid valve controller and the control unit 12 together constitute the environmental protection device control apparatus of the present invention.

A control mode of the water recycling device is described below.

Tap water and recycled water as described hereinafter enter into the industrial water treatment apparatus for treatment, and the flow meter 104 obtains an amount of tap water, i.e., a water flow from the industrial water treatment apparatus, and uploads the water flow to the control unit 12. The water treated by the industrial water treatment apparatus enters into the water process section for use, and the water quality monitoring probe 106 obtains the used water quality parameters in real time from, for example, each pure water washing device in the water process section, and uploads the water quality parameters to the control unit 12. The control unit 12 stores the aforementioned water quality parameters and water flow as environmental protection device operation information, and compares the water quality parameters with a predetermined recycled water standard. When the water quality parameters reach the recycled water standard, the control unit 12 controls the solenoid valve controller 203, so that a conductive direction of a solenoid valve disposed between the water process section and the industrial wastewater treatment apparatus is adjusted to lead to the recycled water treatment apparatus. On the other hand, when the water quality parameters do not reach the recycled water standard, the control unit 12 controls the solenoid valve controller 203 so that the conductive direction of the above solenoid valve is adjusted to lead to the industrial wastewater treatment apparatus. As a result, the recycled water can be made full use of on the premise that the water quality parameters of the industrial wastewater meeting the minimum environmental protection requirements is ensured, thereby minimizing the use of tap water, and reducing the operating energy consumption of, for example, the EDI device in the industrial water treatment apparatus and the related device in the industrial wastewater treatment apparatus.

In addition, although not illustrated, a water quality monitoring probe can also be installed at an outlet of the recycled water treatment apparatus to detect the water quality parameters of the recycled water treated by the recycled water treatment apparatus and upload them to the control unit 12. The control unit 12 compares the water quality parameters of the recycled water with the recycled water standard again, and controls the conductive direction of a solenoid valve at the outlet of the recycled water treatment apparatus, so that the recycled water treated by the industrial water treatment apparatus flows to the industrial water treatment apparatus when the water quality reaches the recycled water standard, and flows to the industrial wastewater treatment apparatus when the water quality does not reach the recycled water standard.

The environmental protection device control apparatus involved in this implementation 1 monitors each environmental parameter in the operation process of each environmental protection device in real time by the environmental parameter obtaining unit, controls the adjustment unit by the control unit based on each environmental parameter obtained by the environmental parameter obtaining unit, so as to reduce the operation cost of the environmental protection device as much as possible while the environmental parameters meet the minimum environmental protection requirements, thus, the environmental protection device can be avoided from operating at a full-load state for a long time on the premise that the environmental protection requirements are met, thereby reducing, as much as possible, the energy consumption cost of the environmental protection device calculated in combination with the real-time electricity cost, as well as other costs for operating the environmental protection device such as treatment costs for waste like wastewater, waste gas, etc.

Implementation 2.

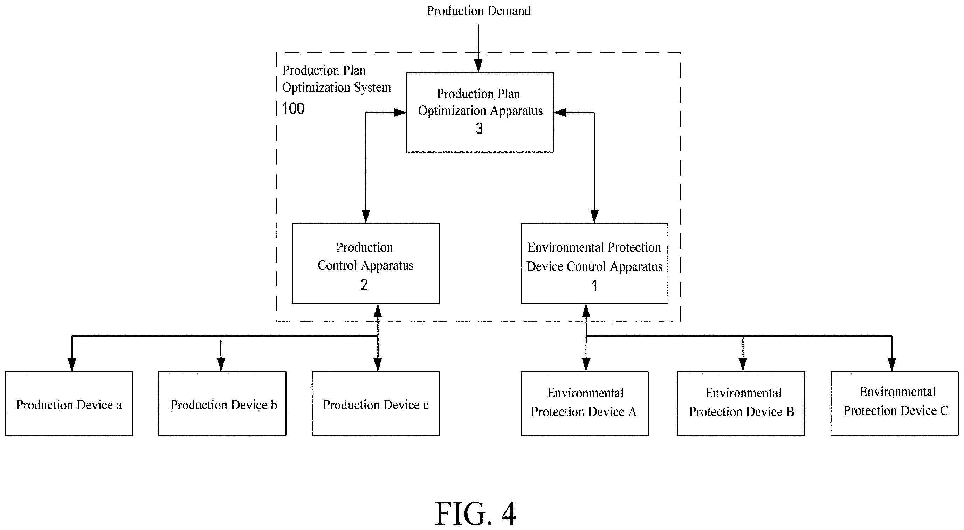

Hereinafter, a production plan optimization system with an environmental protection device control apparatus, a production plan optimization method, and a computer-readable medium storing a program that results in execution of the production plan optimization method involved in this implementation 2 are illustrated with reference to FIGS. 4 to 8.

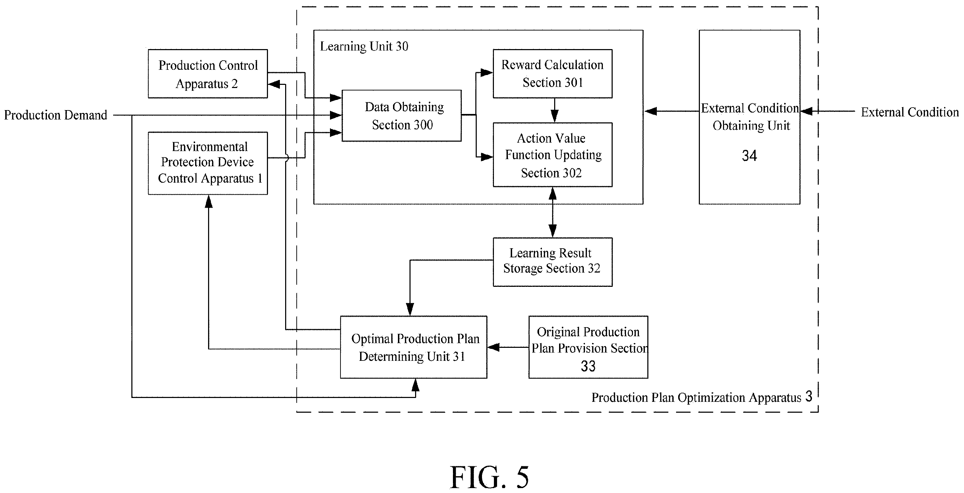

First, a structure of the production plan optimization system is illustrated with reference to the attached drawings. FIG. 4 is a block diagram for illustrating a structure of a production plan optimization system 100 involved in this implementation 2, and FIG. 5 is a block diagram for illustrating a structure of a production plan optimization apparatus 3 in FIG. 4.

As shown in FIG. 4, the production plan optimization system 100 includes an environmental protection device control apparatus 1, a production control apparatus 2, and a production plan optimization apparatus 3.

The environmental protection device control apparatus 1 is, for example, the environmental protection device control apparatus as described in implementation 1, and the environmental protection device control apparatus 1 further controls environmental protection devices A to C according to a production plan from the production plan optimization apparatus 3 so that the environmental parameters in an operation process of the environmental protection devices A to C meet minimum environmental protection requirements, and obtains environmental protection device operation information from the environmental protection devices A to C, respectively. The so-called environmental protection device operation information, for example, contains at least environmental parameters such as VOC concentration, water quality parameter, water flow or the like as well as operating frequency, operating hours or the like of the environmental protection devices A to C as described in implementation 1. In addition, the environmental protection device operation information may also include, for example, a maintenance period of the environmental protection devices A to C, etc.

The production control apparatus 2 controls production devices a to c according to the production plan from the production plan optimization apparatus 3, and obtains production-related information from the production devices a to c. The so-called production-related information, for example, contains at least a production speed, electricity consumption, a production time period, etc. of the production device.

The production plan optimization apparatus 3 obtains production demand information, obtains the production-related information from the production control apparatus 2, and obtains the environmental protection device operation information from the environmental protection device control apparatus 1. As a way to obtain the production demand information, for example, the production demand information input by an operator can be obtained from outside the production plan optimization system 100 through an input apparatus that is not shown, the production demand information stored in a storage device within the production plan optimization system 100 can also be obtained from the storage device that is not shown. Additionally, the production demand information can be, for example, product orders, product specification requirements, etc. After obtaining the above information, the production plan optimization apparatus 3 determines a plurality of production plans based on the production demand information, and calculates a cost of each of the plurality of production plans based on the production-related information and the environmental protection device operation information. As an example of determining a plurality of production plans based on the production demand information, taking 100 units of products need to be produced based on a production demand (e.g., production orders) as an example, the following production modes can be used: one production line is employed in the morning to produce 50 units, one production line is employed in the afternoon to produce 50 units; two production lines are employed in the morning to produce 100 units; one production line is employed in the morning in two days to produce 50 units in each morning respectively, etc. The different production plans as described above will correspond to different pollutant discharge and treatment conditions respectively. After a certain amount of data accumulation and learning, the production plan optimization apparatus 3 can simulate the cost of each production plan corresponding to different production conditions (corresponding to different production demands, production-related information and environmental protection device operation information) before actual production.

In addition, the so-called cost of the production plan, for example, is the cost of electricity consumed by each production device a to c and each environmental protection device A to C during the execution of the production plan, and is obtained by multiplying the electricity consumption of each production device and each environmental protection device by a unit price of electricity during the production time period. In addition, the cost of the production plan can also include a cost of consumed resources such as water, natural gas or the like, and a cost of consumables such as paint or the like. In addition, the cost of the production plan can also include, for example, a maintenance cost of the production device and the environmental protection device or the like, which will be explained in detail later. Next, the production plan optimization apparatus 3 selects a production plan with a lowest cost of the production plan from a plurality of production plans to provide to the production control apparatus 2 and the environmental protection device control apparatus 1 as the optimal production plan.

A specific structure of the production plan optimization apparatus 3 is described below. As shown in FIG. 5, the production plan optimization apparatus 3 includes a learning unit 30 and an optimal production plan determining unit 31.

The learning unit 30 calculates a cost of production plan corresponding to each production plan based on the production-related information and the environmental protection device operation information obtained from the production control apparatus 2 and the environmental protection device control apparatus 1, respectively, and uses machine learning or other means to establish an algorithm which correlates the production demand information and the costs of a plurality of production plans so as to learn a relationship between the production demand information and the costs of the plurality of production plans by accumulating a large amount of the three types of data: the production-related information, the environmental protection device operation information and the costs of production plans. Additionally, the learning unit 30 may provide a learning result directly to the optimal production plan determining unit 31 as described later for use, or may store the learning result in a learning result storage section 32 at first, and then the learning result may be called by the optimal production plan determining unit 31 as needed, as shown in FIG. 5.

The optimal production plan determining unit 31 obtains the production demand information, for example, from outside of the production plan optimization system 100, and calls the learning result from the learning result storage section 32, determines an optimal production plan with the lowest cost according to the production demand information based on the above learning result, and provides the optimal production plan to the production control apparatus 2 and the environmental protection device control apparatus 1, respectively.

The specific structure of the learning unit 30 is described below. As shown in FIG. 5, the learning unit 30 includes a data obtaining section 300, a reward calculation section 301, and an action value function updating section 302.

The data obtaining section 300 obtains the production-related information including at least the production speed, the electricity consumption, and the production time period of the production device from the production control apparatus 2, and obtains the environmental protection device operation information including at least the environmental parameters, and the operating frequency and operating hours of the environmental protection device from the environmental protection device control apparatus 1, and obtains the production demand information, for example, from outside of the production plan optimization system 100.

The reward calculation section 301 obtains each of the above information from the data obtaining section 300, and calculates power consumption per unit time of the environmental protection device based on its operating frequency, and obtains the electricity consumption of the environmental protection device by multiplying the power consumption per unit time by the operating hours of the environmental protection device. Then, the reward calculation section 301 calculates the total electricity consumption by summing the electricity consumption of each production device and the electricity consumption of the environmental protection device. Finally, the reward calculation section 301 obtains a unit price of electricity during the production time period, for example, from an external condition obtaining unit 34 as described later, and calculates the total cost of electricity of each production device and each environmental protection device by multiplying the total electricity consumption as previously obtained by the unit price of electricity. The reward calculation section 301 takes the aforementioned calculated total cost of electricity as the cost of each production plan, and calculates a reward based on the calculated total cost of electricity. A specific calculation method of the reward will be explained later.

In addition, since the environmental protection device control apparatus 1 is the environmental protection device control apparatus as shown in the above-mentioned implementation 1, it is also able to control the environmental protection device, so as to ensure that the environmental parameters can meet the minimum environmental protection requirements.

The action value function updating section 302 obtains the calculated reward from the reward calculation section 301, and obtains information such as the production demand information as well as the production speed and the production time period of the production device and the operating frequency and operating hours of the environmental protection device corresponding to each production plan, etc. from the data obtaining section 300, and updates the action value function based on the above-mentioned information, and stores the updated action value function as one of the learning results in the learning result storage section 32 for calling of the optimal production plan determining unit 31 to determine a next production plan.

Any learning algorithms can be used for the method of updating the action value function by the action value function updating section 302. As one example, a case of application of Reinforcement Learning (RL) can be listed, for example. The so-called reinforcement learning refers to that an agent (an action agent) within an environment observes a current state and determines an action that should be taken. The agent gets a reward from the environment by selecting an action, and learns a policy that gets the most reward through a sequence of actions. As representative methods of reinforcement learning, Q-learning and TD-learning (Time-Difference learning) are known. For example, in the case of Q-learning, a general updating expression (an action value table) of the action value function Q(s,a) is represented by mathematical expression 1.

[Mathematical expression 1]

$$Q(s_t,a_t) \leftarrow Q(s_t,a_t) + \alpha \left( r_{t+1} + \gamma \max_a Q(s_{t+1},a) - Q(s_t,a_t) \right)$$

In mathematical equation 1, st denotes a state at time t, and $a_t$ denotes an action at time t. As a result of the action at, the state changes to $s_{t+1}$. $r_{t+1}$ denotes a reward obtained through the change in the state, $\gamma$ denotes a discount rate, and $\alpha$ denotes a learning coefficient. Here, in the case of application of Q learning, the next production plan determined by the optimal production plan determining unit 31 is made to be an indication for performing the action at.

For the updating expression as shown in mathematical expression 1, if an action value of the best action a at time t+1 is greater than an action value Q of an action a performed at time t, the action value Q at time t is increased, and in the opposite case, the action value Q at time t is decreased. In other words, the action value function Q(s,a) is updated in such a way that the action value Q of the action $a_t$ at time t is close to the best action value at time t+1. As a result, the best action value in an environment is propagated sequentially to the action values in its previous environment.

The production plan optimization system involved in this implementation 2 collects a large amount of data in the execution process of each production plan corresponding to the production demand, including the production-related information and the environmental protection device operation information from the production control apparatus and the environmental protection device control apparatus, and calculates the cost of each production plan including the environmental protection device operation cost to meet the environmental protection requirements, establishes a correlative model between the production plan and the cost through machine learning, so as to assist a decision maker to quickly obtain the cost of each production plan corresponding to the production demand through simulation and select the optimal production plan with a lowest cost therefrom with knowing the production demand. Thus, the operation of the environmental protection device can be used as one of elements of formulating the production plan, such that the optimal production plan that not only meets the environmental protection requirements but also minimizes the cost can be formulated for different production requirements.

The main structure of the production plan optimization system 100 of this implementation has been described above. However, a maintenance cost of the environmental protection device can also be taken into account when the reward calculation section calculates the reward. Specifically, the data obtaining section 300 can also obtain a maintenance period of the environmental protection device from the environmental protection device control apparatus 1, and the reward calculation section 301 calculates the number of times the environmental protection device needs to be maintained within a certain number of operating hours based on the relationship between the operating hours of the environmental protection device and the maintenance period, and calculates the maintenance cost of the environmental protection device corresponding to each production plan in combination with the cost of each maintenance. Furthermore, the reward calculation section 301 sums the calculated maintenance cost of the environmental protection device and the previously calculated cost of electricity as a total cost of each production plan.

In addition, as an example of a maintenance cost of the environmental protection device, a cost of electronic components and materials or the like to be replaced, a labor cost of operators, and a cost of energy consumption and resource consumption or the like for maintenance of operation (e.g., the need to replace washing water when a washing device is used) can be listed, for example.

Since the maintenance cost of the environmental protection device is also taken into account, a cost of a production plan can be calculated more accurately on the premise that the environmental parameters can meet the minimum environmental protection requirements is ensured, such that the optimal production plan can be obtained more accurately.

In addition, as shown in FIG. 5, the production plan optimization apparatus 3 can also include an original production plan provision section 33 in which a list of actions to be performed during an initial phase of learning, i.e., an original production plan, is saved, and the original production plan provision section 33 provides the original production plan to the optimal production plan determining unit 31 in the initial phase after learning begins. As an example of a method for determining the original production plan, for example, the original production plan can be input by a production technician as a user via an input apparatus that is not shown, or the original production plan can be determined by referring to a production plan history up to date pre-saved in the original production plan provision section 33.

Further, during the initial phase after learning begins, the optimal production plan determining unit 31 first causes the production control apparatus 2 and the environmental protection device control apparatus 1 to execute the original production plan, and the data obtaining section 300 obtains the production-related information and the environmental protection device operation information after the original production plan is executed, and the action value function updating section 302 also updates the action value function based on a reward calculated by the reward calculation section as well as the production-related information and the environmental protection device operation information after the original production plan is executed, and provides the updated action value function to the optimal production plan determining unit 31 again.

In addition, as shown in FIG. 5, the production plan optimization apparatus 3 can also include an external condition obtaining unit 34, which obtains an external condition that changes over time during workday from outside the production plan optimization system 100, calculates the cost reduction due to the use of non-conventional energy for the plurality of production plans corresponding to the production demand information based on the external condition, and provides the cost reduction due to the use of the non-conventional energy to the learning unit 30.

An example of the external condition is a weather condition such as light intensity, wind, etc., that changes over time during workday, and the external condition obtaining unit 34 obtains the weather condition during workday in real time from outside, for example, through a communication section that is not shown, calculates the cost reduction due to the use of solar energy based on the light intensity information in the weather condition, calculates the cost reduction due to the use of wind energy based on the wind information in the weather condition, and provides the cost reduction due to the use of non-conventional energy such as solar energy, wind energy, etc. to the reward calculation section 301 in the learning unit 30. The reward calculation section 301 calculates the reward by taking into account the cost reduction due to the use of the non-conventional energy such as solar energy, wind energy, etc. As a result, the learning unit 30 learns the relationship between the production demand information and the cost of the production plan under different external conditions by taking into account the cost reduction due to the use of the non-conventional energy. The optimal production plan determining unit 31 then determines the optimal production plan under different external conditions according to the production demand information based on the learning result of the learning unit 30.

In addition, as described above, the external condition obtaining unit 34 can also obtain a real-time price of electricity during the production time period from outside through the communication section that is not shown, and provide it to the reward calculation section 301 in the learning unit 30 for calculating the cost of electricity of the production device and the environmental protection device.

According to the above structure, since the external condition obtaining unit is included, external conditions such as real-time weather conditions are taken into account in calculating the reward, and a real-time price of electricity is used, the cost of each production plan can be calculated more accurately, such that a better production plan can be obtained on the premise that the environmental parameters meeting the minimum environmental protection requirements can be ensured.

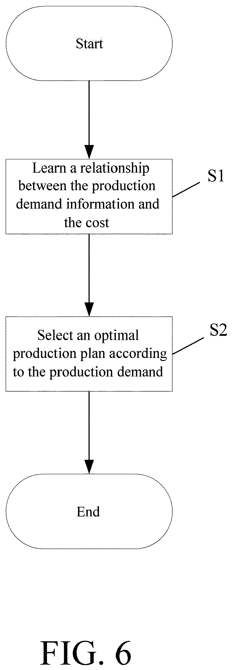

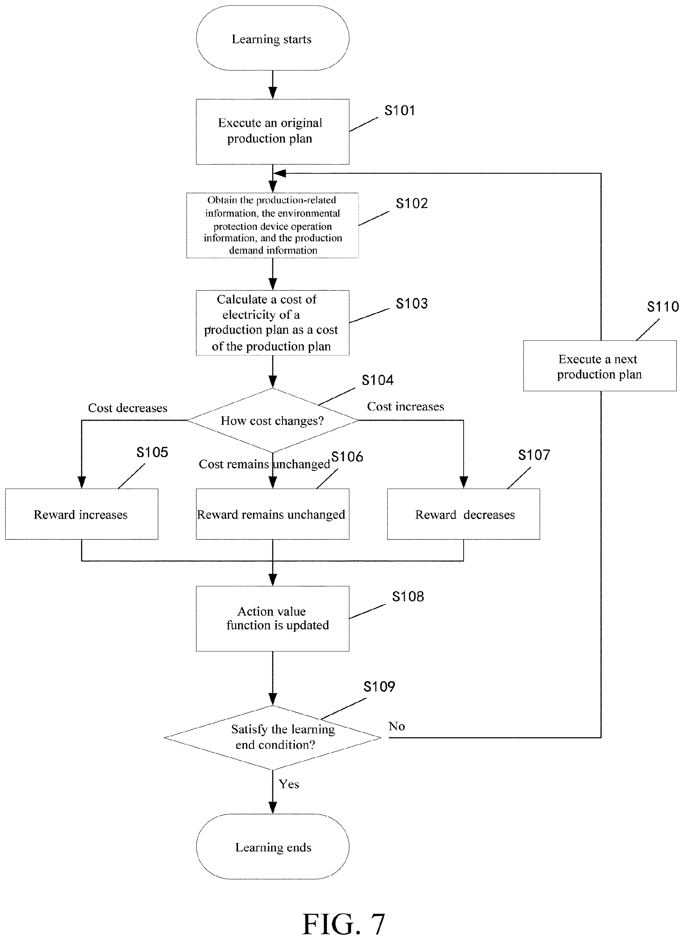

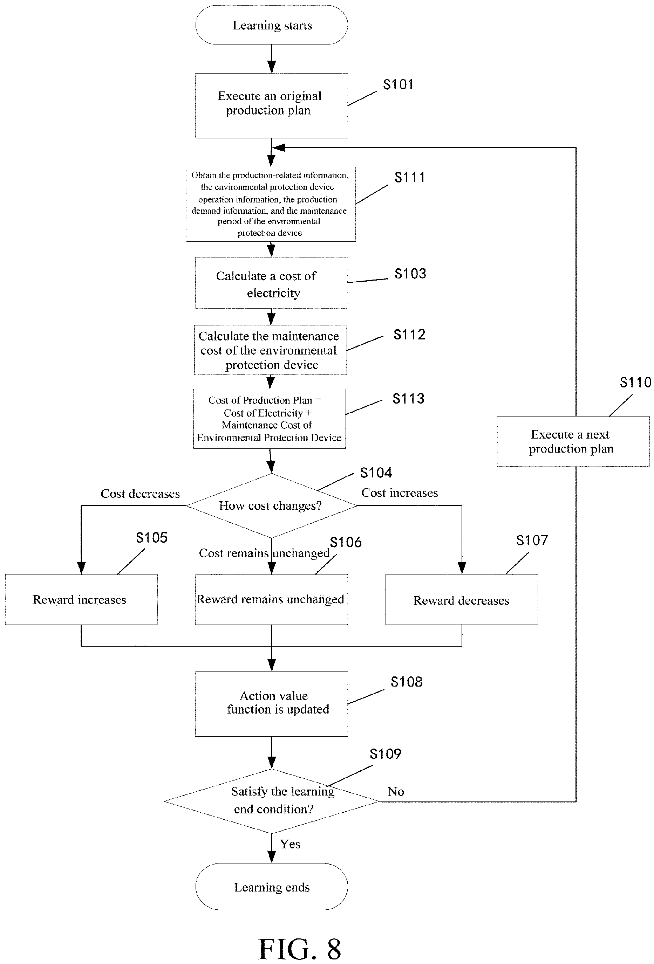

Next, a production plan optimization method is described with reference to the attached drawings. FIG. 6 is a flowchart for illustrating a production plan optimization method, FIG. 7 is a flowchart for illustrating one embodiment of a learning step in FIG. 6, and FIG. 8 is a flowchart for illustrating another embodiment of a learning step in FIG. 6.

As shown in FIG. 6, first, in step S1, the learning unit 30 in the production plan optimization apparatus 3 learns a relationship between the production demand information and the cost of a plurality of production plans corresponding to the production demand information based on the production-related information obtained from the production control apparatus 2, the environmental protection device operation information obtained from the environmental protection device control apparatus 1, and the obtained production demand information, stores a learning result in the learning result storage section 32, and the method proceeds to step S2. A specific method of learning will be explained in the following.

Next, in step S2, the optimal production plan determining unit 31 retrieves the learning result from the learning result storage section 32 and, based on the learning result, according to the production demand information, selects a production plan with a lowest cost of the production plan from the plurality of production plans corresponding to the production demand information as the optimal production plan.

A specific embodiment of learning is described below.

As shown in FIG. 7, after learning begins, first, in step S101, the optimal production plan determining unit 31 obtains the original production plan from the original production plan provision section 33, provides the original production plan to the environmental protection device control apparatus 1 and the production control apparatus 2 as the optimal production plan up to date temporarily, causes each environmental protection device A to C and each production device a to c to execute the original production plan, and the method proceeds to step S102.

Next, in step S 102, the data obtaining section 300 in the learning unit 30 obtains the production-related information including at least the production speed, the electricity consumption, and the production time period of each production device a to c from the production control apparatus 2, obtains the environmental protection device operation information including at least the environmental parameters in the operation process of each environmental protection device A to C as well as the operating frequency and operating hours of each environmental protection device A to C from the environmental protection device control apparatus 1, and obtains the production demand information, and then the method proceeds to step S103.

In step S103, the reward calculation section 301 in the learning unit 30 calculates the electricity consumption of each environmental protection device A to C respectively based on the operating frequency and operating hours of each environmental protection device A to C, adds the electricity consumption of the environmental protection devices A to C to the electricity consumption of the production devices a to c, and multiplies the result by the unit price of electricity during the production time period obtained from the external condition obtaining unit 34, thereby calculating the cost of electricity of the production devices a to c and the environmental protection devices A to C as the cost of the production plan, and then the method proceeds to step S104.

In step S 104, the reward calculation section 301 determines how the cost changes. For example, an original cost can be preset, and the calculated cost of the original production plan is compared with the original cost. When it is determined in step S104 that the cost decreases compared to the original cost (step S104: cost decreases), the method proceeds to step S105 so that the reward is increased, for example, +1, and then the reward calculation section 301 finishes reward calculation processing and sends the calculation result to the action value function updating section 302. When it is determined in step S104 that the cost remains unchanged compared to the original cost (step S104: cost remains unchanged), the method proceeds to step S106 so that the reward is remained unchanged, and then the reward calculation section 301 finishes reward calculation processing and sends the calculation result to the action value function updating section 302. When it is determined in step S104 that the cost increases compared to the original cost (step S 104: cost increases), the method proceeds to step S107 so that the reward is decreased, for example, -1, and then the reward calculation section 301 finishes reward calculation processing and sends the calculation result to the action value function updating section 302.

Next, in step S 108, the action value function updating section 302 updates the action value function based on the reward calculated by the reward calculation section 301, the production demand information, and the production speed and the production time period of each production device a to c and the operating frequency and operating hours of each environmental protection device A to C corresponding to the original production plan. The specific method of updating the action value function is described above.

Then, in step S109, the learning unit 30 determines whether the learning satisfies a learning end condition. Here, the so-called learning end condition refers to a condition where the learning unit 30 ends machine learning. An example of the learning end condition can be that the number of times of learning exceeds a predetermined upper limit, or can be that the reward, calculated by putting a history of data such as the production-related information, the environmental protection device operation information and the production demand information or the like accumulated in the past into the action value function for a certain production demand, is equal to the reward calculated by the reward calculation section 301 based on the measured value, or that the deviation between the two rewards is within a predetermined range. If the learning unit 30 determines that the above learning end condition is not satisfied (step S109: No), the method proceeds to step S110 and executes a next production plan, and then returns to step S102 and begins learning the next production plan again. In this case, the above-mentioned steps S102 to S109 are repeated executed. On the other hand, if the learning unit 30 determines that the above learning end condition is satisfied (step S109: Yes), the whole learning process is ended.

Another specific embodiment of learning is described below.

This embodiment of learning differs from the previous embodiment in that the method proceeds to step S 111 after the original production plan is executed in step S 101. In step S 111, the data obtaining section 300 not only obtains the production-related information, the environmental protection device operation information and the production demand information, but also obtains the maintenance period of each environmental protection device A to C from the environmental protection device control apparatus 1.

In addition, after calculating the cost of electricity of the environmental protection devices A to C and the production devices a to c in step S 103, the reward calculation section 301 also calculates the maintenance cost of the environmental protection device based on the operating hours and the maintenance period of the environmental protection device in step S112, and in step S113,sums the cost of electricity calculated in step S103 and the maintenance cost of the environmental protection device calculated in step S112 as the cost of the production plan.

Other steps of this embodiment are the same as those in the previous embodiment, and a description of them is omitted here.

The production plan optimization method of this implementation is described above, but the present invention is not limited thereto. For example, after completing step S 102 or step S111, the data obtaining section 300 may also obtain the external condition that changes over time during workday from the external condition obtaining unit 34. In step S103 or step S113, the reward calculation section 301 also calculates the cost reduction due to the use of the non-conventional energy based on the external condition, and takes the cost reduction due to the use of the non-conventional energy into account to calculate the cost of the production plan.

In addition, the implementation of the production plan optimization apparatus of the present invention by hardware is illustrated above, but the present invention is not limited thereto. The production plan optimization method of the present invention can also be implemented by software, or the present invention can be implemented by a combination of software and hardware. Furthermore, the program for executing the production plan optimization method of the present invention can also be stored in various computer-readable media, and can be loaded to, for example, a CPU or the like for execution as needed. There is no particular limitation for the computer-readable media, for example, HDDs, disks such as CD-ROMs, CD-Rs, MOs, MDs, DVDs, etc., IC cards, floppy disks, and semiconductor memories such as mask ROMs, EPROMs, EEPROMs, flash ROMs, etc. can be used.

Implementation 3.

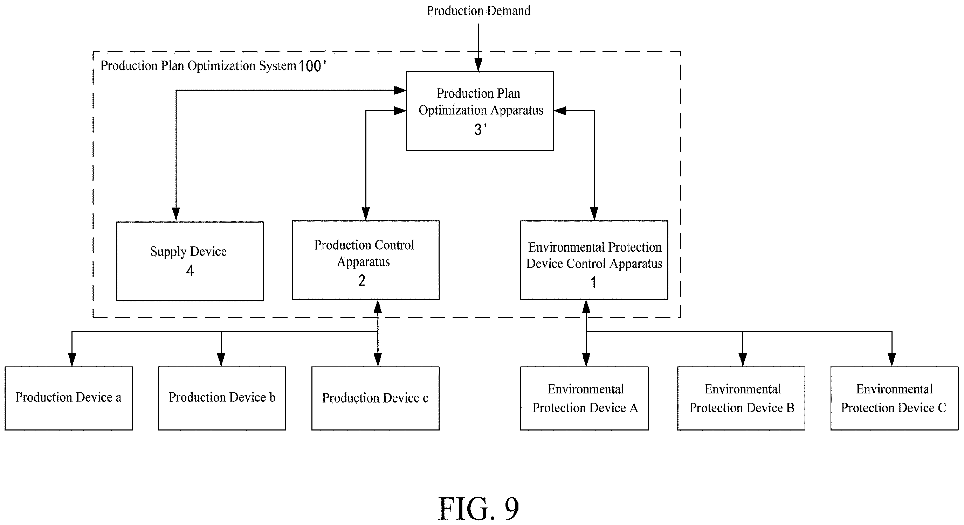

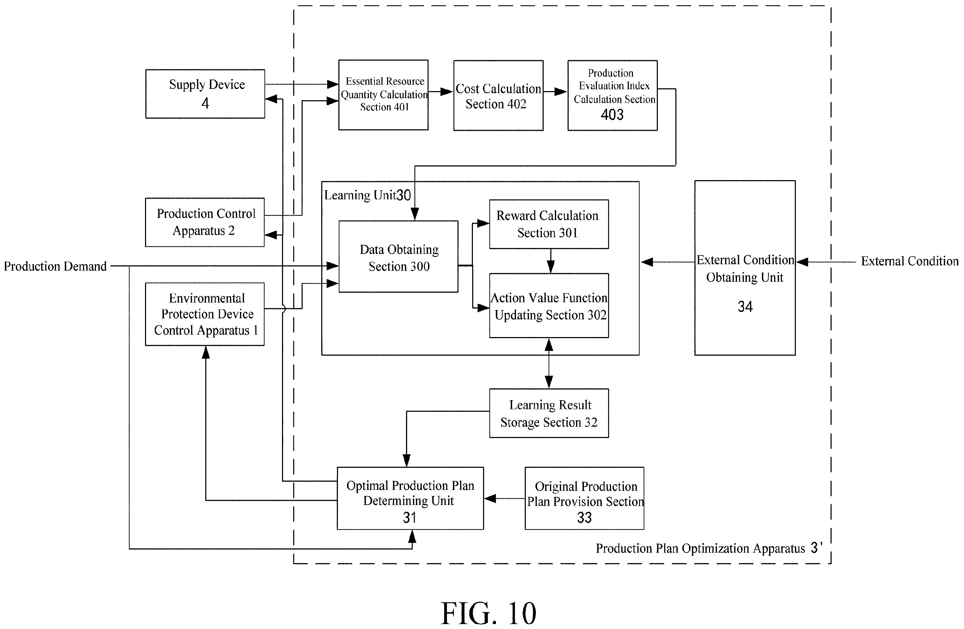

Hereinafter, a production plan optimization system with an environmental protection device control apparatus involved in this implementation 3 is illustrated with reference to FIGS. 9 to 14.

FIG. 9 is a block diagram for illustrating a structure of a production plan optimization system involved in this implementation 3. As shown in FIG. 9, a production plan optimization system 100' involved in this implementation 3 differs from the production plan optimization system 100 of implementation 2 in that it also includes a supply device 4, which is a device that supplies resources to the production devices a to c.

The resources supplied to the production devices a to c by the supply device 4 are, for example, cold water, warm water, compressed air, electricity, etc. The supply device 4 generates supply device information related to the supply device 4, and outputs the generated supply device information to a production plan optimization apparatus 3'. Further, the supply device 4 controls supply of resources based on the instructions from the production plan optimization apparatus 3 '. In addition, although not shown, the production devices a to c and the supply device 4 are connected, for example, through supply lines for the supply of resources such as water supply pipes, air pipes or electrical lines, etc.

A specific structure of the production plan optimization apparatus 3' is described below. As shown in FIG. 5, the production plan optimization apparatus 3' involved in this implementation differs from the production plan optimization apparatus 3 of implementation 2 in that it also includes an essential resource quantity calculation section 401, a cost calculation section 402, and a production evaluation index calculation section 403.

The essential resource quantity calculation section 401 obtains production-related information generated after the production control apparatus 2 implements a production plan from the production control apparatus 2, and obtains supply device information generated after the production control apparatus 2 implements the production plan from the supply device 4. Furthermore, the essential resource quantity calculation section 401 determines a plurality of resources for implementing the production plan based on the production plan according to the above obtained production-related information and supply device information. Then, the essential resource quantity calculation section 401 calculates a quantity of each of the plurality of resources essential to implement the production plan as the quantity of the essential resource. Since the production plan contains a plurality of production processes, the essential resource quantity calculation section 401 determines the resources required to implement each production process for each process, and calculates the quantity of the essential resource for the determined resources.

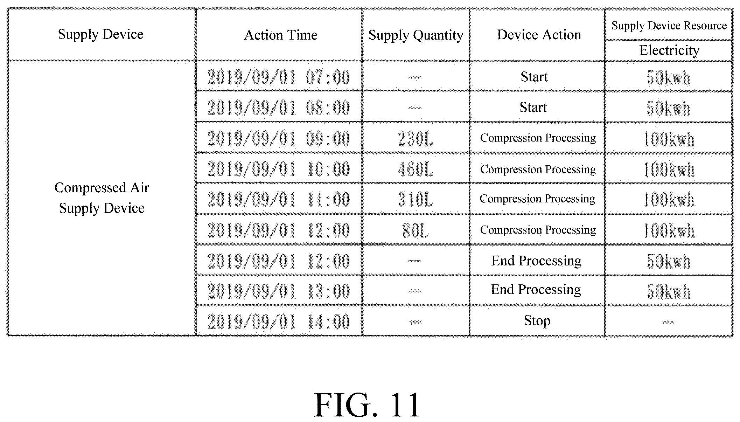

FIG. 11 represents an example of supply device information of this implementation, i.e., an example of supply device information of a compressed air supply device. As shown in FIG. 11, the supply device information of the compressed air supply device consists of the supply device, action time, supply quantity, device action, and resource of the supply device, etc.

The essential resource quantity calculation section 401 obtains the supply device information from the supply device 4 and obtains the production-related information from the production control apparatus 2, and aggregates the essential quantity of resources consumed by the production devices a to c and the supply device 4 in each production process based on the obtained supply device information and the production-related information, to generate essential resource quantity information.

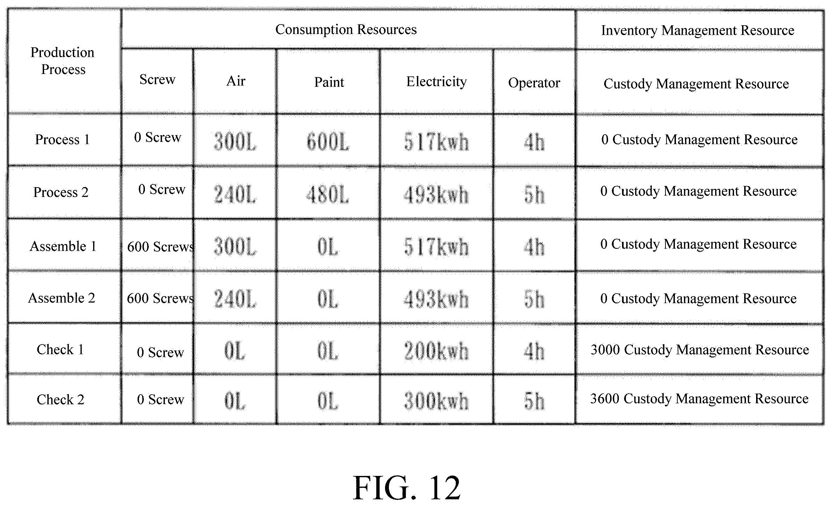

FIG. 12 represents an example of the essential resource quantity information. In the essential resource quantity information of FIG. 12, the quantity of essential resources calculated by the essential resource quantity calculation section 401 is shown for each production process. In the essential resource quantity information of FIG. 12, as resources for implementing the production plan, consumption resources, inventory management resources, and supply device resources are illustrated. The so-called consumption resources refer to resources consumed in production. Consumption resources include, for example, materials used for production. The so-called inventory management resources refer to resources used for inventory management of products. The so-called supply device resources refer to resources that are consumed to supply consumption resources by the supply device which supplies the consumption resources. In FIG. 12, data such as "600" recorded in the column of consumption resources is the quantity of essential resource for consumption resources. In addition, "3000" recorded in the column of inventory management resources is the quantity of essential resource for inventory management resources. Thus, in FIG. 12, a quantity of essential resource for consumption resources, a quantity of essential resource for inventory management resources, and a quantity of essential resource for supply device resources are shown for each production process.

The cost calculation section 402 calculates a cost for obtaining the quantity of essential resources for each resource determined by the essential resource quantity calculation section 401. As described above, since the essential resource quantity calculation section 401 calculates the quantity of essential resource for each production process, the cost calculation section 402 also calculates the cost for obtaining the quantity of essential resource for each production process. Specifically, the cost calculation section 402 obtains the above-mentioned essential resource quantity information from the essential resource quantity calculation section 401, and integrates it with the saved expenditure item information to calculate the cost of the resources required for the production device and supply device in each production process, so as to generate cost information.

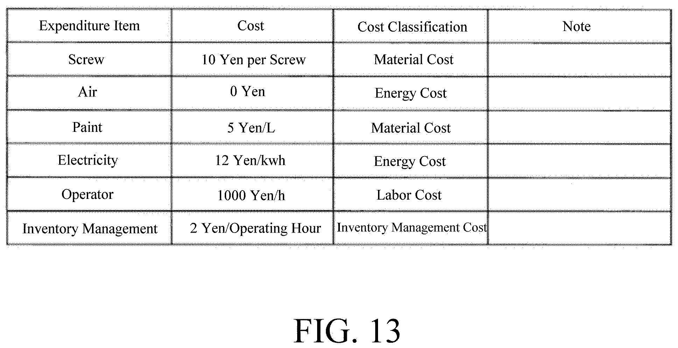

FIG. 13 represents the expenditure item information. As shown in FIG. 13, the expenditure item information consists of expenditure items, costs, and cost classifications. The expenditure items correspond to the expenditure items for the consumption resources as shown in FIG. 12. The cost column shows a unit price of cost of each expenditure item. The cost classification column shows the classification of cost in a usage category. Further, the note column as shown in FIG. 13 is for reference, and is not included in the expenditure item information.

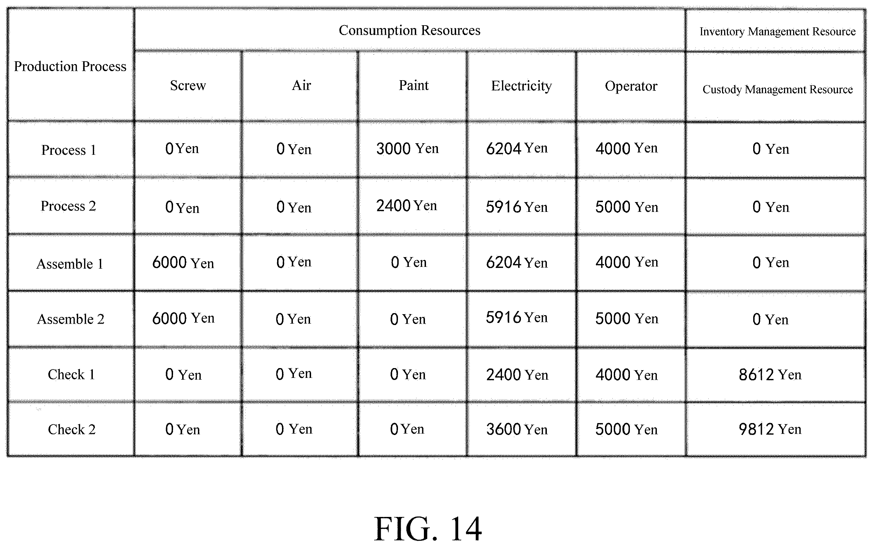

FIG. 14 represents the cost information. As shown in FIG. 14, the structure of the cost information is the same as the structure of the essential resource quantity information in FIG. 12. However, in the essential resource quantity information of FIG. 12, the quantity of essential resource is recorded for each production process and each resource, while in the cost information of FIG. 14, the cost is recorded for each production process and each resource.

For resources except the inventory management resources, the cost calculation section 402 calculates the cost of each resource by multiplying the quantity of essential resource recorded in the essential resource quantity information of FIG. 12 by the value of the cost recorded in the expenditure item information of FIG. 13.

For the inventory management resources, the cost calculation section 402 calculates the cost according to equation 1 as follows.

[Equation 1]

$$\text{Inventory Management Cost} = \Sigma\,[(\text{Inventory Quantity}) \times (\text{Material Cost}) \times (\text{Inventory Interest})/100 + (\text{Inventory Quantity}) \times (\text{Retention Time}) \times (\text{Inventory Management Cost}) \times (\text{Custody Management Resource})]$$

The production evaluation index calculation section 403 obtains the cost information from the cost calculation section 402, and calculates a production index that becomes a production plan optimization index based on the obtained cost information.

Specifically, the production evaluation index calculation section 403 assigns each resource to a certain usage category based on the usage of the resource for each production process. Then, the production evaluation index calculation section 403 aggregates the cost of resources for each production process and usage category. In addition, the production evaluation index calculation section 403 converts the aggregated result of the cost of a plurality of usage categories for a plurality of production processes to an index. The aggregated result of the cost obtained after being converted to the index by the production evaluation index calculation section 403 is referred to as a production evaluation index.

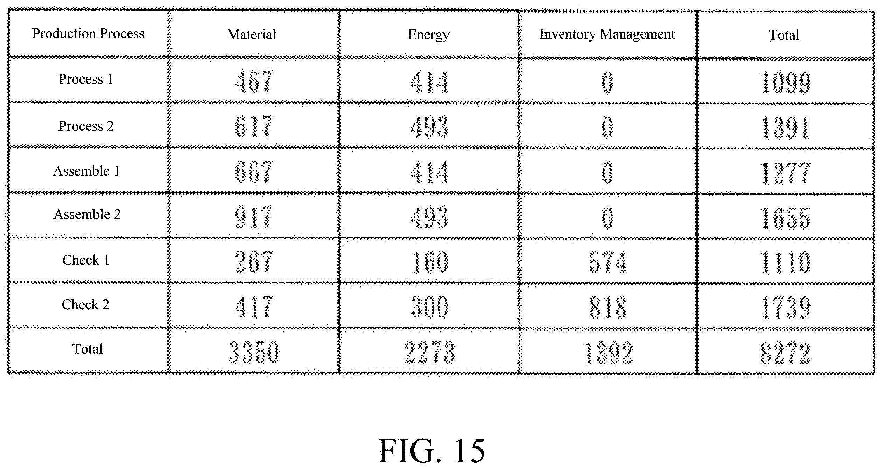

FIG. 15 represents production evaluation index information. For each production process, the production evaluation index information shows a production evaluation index for each usage category calculated by the production evaluation index calculation section 403. In the example of FIG. 15, material category, energy category, inventory management category, etc. are listed as usage categories.

The production evaluation index for the material category is a sum of values obtained by multiplying a sum of the material cost and the labor cost by the load time and dividing the result by the product quantity (see Equation 2 below). In the example of FIG. 15, the material cost is a value of screws and paint, and the labor cost is a value of operators. Here, the load time, as shown in Equation 5 below, is the time obtained by subtracting the plan downtime from the operating time based on the current production plan.

The production evaluation index for the energy category is a sum of values obtained by multiplying the energy cost by the load time and dividing the result by the product quantity (see Equation 3 below). In the example of FIG. 15, the energy cost is a value of air and electricity.

The production evaluation index for the inventory management category is a sum of values obtained by multiplying the inventory management cost by the load time and dividing the result by the product quantity (see Equation 4 below). In the example of FIG. 15, the inventory management cost is a value of the custody management resource.

[Equation 2]

$$(\text{Material}) = \Sigma \ \{(\text{Material Cost}) + (\text{Labor Cost})\} \times (\text{Load Time})/(\text{Product Quantity})$$

[Equation 3]

$$(\text{Energy}) = \Sigma (\text{Energy Cost}) \times (\text{Load Time})/(\text{Product Quantity})$$

[Equation 4]

$$(\text{Inventory Management}) = \Sigma (\text{Inventory Management Cost}) \times (\text{Load Time})/(\text{Product Quantity})$$

[Equation 5]

$$(\text{Load Time}) = (\text{Operating Time}) - (\text{Plan Downtime})$$

As described above, if a production evaluation index is solved for each usage category, the production evaluation index calculation section 403 uses a production evaluation index for each usage category and a weighting coefficient for each usage category to calculate an evaluation value of the production plan. The evaluation value is an index value obtained by normalizing the production evaluation index for each usage category.

Specifically, the more appropriate the production plan is, the smaller the evaluation value obtained from the following Equation 6.

[Equation 6]

$$(\text{Evaluation Value}) = w1 \times (\text{Material}) + w2 \times (\text{Energy}) + w3 \times (\text{Inventory Management})$$

where w1, w2, and w3 are weighting coefficients that can be appropriately set by a user based on conditions such as environment of a production site, evaluation priorities, etc.

Finally, the production evaluation index calculation section 403 inputs the resulting evaluation value to the data obtaining section 300 of the learning unit 30, and then the reward calculation section 301 utilizes it along with the operation cost of the environmental protection device as a reward.

In addition to the cost of electricity of the production device, the production plan optimization system involved in this implementation 3 also takes the cost of various essential resources such as materials, energy, and inventory management, etc. in the production process into account, to calculate the cost of each production plan, including the environmental protection device operation cost to meet environmental protection requirements, and to establish a correlative model between the production plan and the cost through machine learning, so as to further reduce the cost of the product plan and obtain a more optimal production plan.

Furthermore, it should be appreciated that all aspects of the presently disclosed implementations are merely examples, and are not limiting. The scope of the present invention is represented by the claims rather than by the implementations as described above, and the scope of the present invention also includes all modifications and variations within the meaning and scope equivalent to the claims.

**Utility in industry**

As described above, an environmental protection device control apparatus, a production plan optimization system equipped with the environmental protection device control apparatus, a production plan optimization method, and a computer-readable medium storing a program that results in execution of the production plan optimization method according to the present invention are useful in an aspect of optimizing an operation mode of an environmental protection device in a factory equipped with the environmental protection device and a production plan of the entire factory.

**Description of Reference Numbers**

1 Environmental Protection Device Control Apparatus
2 Production Control Apparatus
3, 3' Production Plan Optimization Apparatus
4 Supply Device
10 Environmental Parameter Obtaining Unit
11 Adjustment Unit
12 Control Unit
30 Learning Unit
31 Optimal Production Plan Determining Unit
32 Learning Result Storage Section
33 Original Production Plan Provision Section
34 External Condition Obtaining Unit
100, 100' Production Plan Optimization System
101 VOC Collection Apparatus Monitoring Probe
102 Purified Gas VOC Concentration Monitoring Probe
104, 105 Flow Meter
106 Water Quality Monitoring Probe
201 Fan Converter
203 Solenoid Valve Controller
300 Data Obtaining Section
301 Reward Calculation Section
302 Action Value Function Updating Section
401 Essential Resource Quantity Calculation Section
402 Cost Calculation Section
403 Production Evaluation Index Calculation Section

**Claims**

1.   An environmental protection device control apparatus, comprising:

an environmental parameter obtaining unit to obtain environmental parameters in an operation process of an environmental protection device;
an adjustment unit to adjust the environmental protection device; and
a control unit to control the adjustment unit based on the environmental parameters obtained by the environmental parameter obtaining unit, such that an operation cost of the environmental protection device is reduced while the environmental parameters meet minimum environmental protection requirements.

2.   The environmental protection device control apparatus of claim 1, wherein,

the environmental protection device is a VOC treatment device including a VOC collection apparatus, a VOC treatment apparatus, and a purified gas discharge apparatus,

the environmental parameter obtaining unit is a VOC concentration monitoring probe to obtain VOC concentrations from at least the VOC collection apparatus and the purified gas discharge apparatus, respectively and to use the VOC concentrations as the environmental parameters,

the adjustment unit is a converter to adjust at least an operating frequency of a fan of the VOC treatment device,

the control unit to control the converter based on the VOC concentrations, such that an operation cost of the VOC treatment device is reduced while the VOC concentrations meet the minimum environmental protection requirements.

3. The environmental protection device control apparatus of claim 1, wherein,

the environmental protection device is a water recycling device including an industrial water treatment apparatus, a water process section, an industrial wastewater treatment apparatus, and a recycled water treatment apparatus,

the environmental parameter obtaining unit is a water quality monitoring probe and a flow meter, the water quality monitoring probe to obtain water quality parameters of industrial wastewater after being used from at least the water process section, the flow meter to obtain an amount of water from at least the industrial water treatment apparatus and the recycled water treatment apparatus, and the environmental parameter obtaining unit to use the water quality parameters and the amount of water as the environmental parameters,

the adjustment unit is a solenoid valve controller to adjust a conductive direction of a solenoid valve disposed between the water process section and the industrial wastewater treatment apparatus,

the control unit to control the solenoid valve controller based on the water quality parameters and the amount of water, such that an operation cost of the water recycling device is reduced while the water quality parameters meet the minimum environmental protection requirements.

4. A production plan optimization system, comprising:

an environmental protection device control apparatus of any of claims 1 to 3 to control an environmental protection device according to a production plan such that environmental parameters meet minimum environmental protection requirements, and to obtain environmental protection device operation information from the environmental protection device;

a production control apparatus to control a production device according to the production plan, and to obtain production-related information from the production device; and

a production plan optimization apparatus to obtain production demand information, to obtain the production-related information from the production control apparatus, and to obtain the environmental protection device operation information from the environmental protection device control apparatus, and to determine a plurality of production plans according to the production demand information, and to obtain a cost of each production plan of the plurality of production plans based on the production-related information and the environmental protection device operation information, and then to select a production plan with a lowest cost of the production plan from the plurality of production plans as an optimal production plan, and to provide the optimal production plan to the environmental protection device control apparatus and the production control apparatus.

5. The production plan optimization system of claim 4, wherein,
the production plan optimization apparatus including:

a learning unit to learn a relationship between the production demand information and costs of the plurality of production plans based on the production-related information, the environmental protection device operation information and the production demand information; and

an optimal production plan determining unit to determine the optimal production plan according to the production demand information based on a learning result of the learning unit.

6. The production plan optimization system of claim 5, wherein,
the learning unit including:

a data obtaining section to obtain the production-related information including at least a production speed, electricity consumption, and a production time period of the production device from the production control apparatus, to obtain the environmental protection device operation information including at least the environmental parameters as well as an operating frequency and operating hours of the environmental protection device from the environmental protection device control apparatus, and to obtain the production demand information;

a reward calculation section to calculate electricity consumption of the environmental protection device according to the operating frequency and the operating hours of the environmental protection device, to calculate a cost of electricity of the production device and the environmental protection device as a cost of each production plan of the plurality of production plans by summing the electricity consumption of the environmental protection device and the electricity consumption of the production device and multiplying the sum by a unit price of electricity during the production time period, the reward calculation section to calculate a reward based on a cost of each production plan; and

an action value function updating section to update an action value function according to the reward calculated by the reward calculation section, the production demand information as well as a production speed and a production time period of the production device and an operating frequency and operating hours of the environmental protection device corresponding to each production plan.

7. The production plan optimization system of claim 6, wherein,

the data obtaining section further to obtain a maintenance period of the environmental protection device from the environmental protection device control apparatus,

the reward calculation section to calculate a maintenance cost of the environmental protection device according to the operating hours and the maintenance period of the environmental protection device, and to sum the maintenance cost of the environmental protection device and the cost of electricity of the production plan optimization system as a cost of each production plan of the plurality of production plans.

8. The production plan optimization system of claim 5, wherein,

the production plan optimization apparatus further including an original production plan provision section, the original production plan provision section to determine an original production plan according to a user input or a history of production plans saved in the original production plan provision section, and to provide the original production plan to the optimal production plan determining unit,

the optimal production plan determining unit to provide the original production plan to the production control apparatus and the environmental protection device control apparatus.

9. The production plan optimization system of any of claims 5 to 8, wherein.

the production plan optimization apparatus further including an external condition obtaining unit, the external condition obtaining unit to obtain an external condition that changes over time during workday from outside the production plan optimization system, and to calculate cost reduction due to the use of non-conventional energy for the plurality of production plans corresponding to the production demand information based on the external condition,

the learning unit further to learn the relationship between the production demand information and the costs of the plurality of production plans under different external conditions by taking into account the cost reduction due to the use of the non-conventional energy,

the optimal production plan determining unit to determine the optimal production plan under different external conditions according to the production demand information based on the learning result of the learning unit.

10. A production plan optimization method, comprising:

a learning step, during which to learn a relationship between production demand information and costs of a plurality of production plans corresponding to the production demand information based on production-related information obtained from a production control apparatus that controls a production device according to a production plan, environmental protection device operation information obtained from an environmental protection device control apparatus that controls an environmental protection device according to the production plan, and the production demand information; and

an optimal production plan determining step, during which to select a production plan with a lowest cost of the production plan from the plurality of production plans as an optimal production plan according to the production demand information based on a learning result of the learning step.

**11.** The production plan optimization method of claim 10, wherein,
the learning step including:

a data obtaining step, during which to obtain the production-related information including at least a production speed, electricity consumption, and a production time period of the production device from the production control apparatus, to obtain the environmental protection device operation information including at least environmental parameters in an operation process of the environmental protection device as well as an operating frequency and operating hours of the environmental protection device from the environmental protection device control apparatus, and to obtain the production demand information;

a reward calculation step, during which to calculate electricity consumption of the environmental protection device based on the operating frequency and the operating hours of the environmental protection device, to calculate a cost of electricity of the production device and the environmental protection device as a cost of each production plan of the plurality of production plans by summing the electricity consumption of the environmental protection device and the electricity consumption of the production device and multiplying the sum by a unit price of electricity during the production time period, the reward calculation section to calculate a reward based on a cost of each production plan; and

an action value function updating step, during which to update an action value function according to the reward calculated during the reward calculation step, the production demand information as well as a production speed and a production time period of the production device and an operating frequency and operating hours of the environmental protection device corresponding to each production plan.

**12.** The production plan optimization method of claim 11, wherein,

during the data obtaining step further to obtain a maintenance period of the environmental protection device from the environmental protection device control apparatus,

during the reward calculation step to calculate a maintenance cost of the environmental protection device according to the operating hours and the maintenance period of the environmental protection device, and to add the maintenance cost of the environmental protection device to the cost of electricity as a cost of each production plan of the plurality of production plans.

**13.** The production plan optimization method of claim 10, wherein,

further including an original production plan provision step, during which to determine and provide an original production plan according to a user input or a saved history of production plans,

during the optimal production plan determining step to provide the original production plan to the production control apparatus and the environmental protection device control apparatus.

**14.** The production plan optimization method of any of claims 10 to 13, wherein,

further including an external condition obtaining step, during which to obtain an external condition that changes over time during workday from outside, and to calculate cost reduction due to the use of non-conventional energy for the plurality of production plans corresponding to the production demand information based on the external condition,

during the learning step further to learn the relationship between the production demand information and the costs of the plurality of production plans under different external conditions by taking into account the cost reduction due to the use of the non-conventional energy,

during the optimal production plan determining step to determine the optimal production plan under different external conditions according to the production demand information based on the learning result of the learning step.

**15.** A computer-readable medium storing a program to execute the production plan optimization method of any of claims 10 to 14.

FIG. 1

FIG. 2

Control Unit 12

Fan Converter 201

VOC Collection Apparatus Monitoring Probe 101

Purified Gas VOC Concentration Monitoring Probe 102

VOC Treatment Device

Purified Gas Discharge Apparatus

VOC Treatment Apparatus

VOC Collection Apparatus

Production Environment

FIG. 3

EP 4 261 632 A1

Production Demand

Production Plan Optimization System 100

Production Plan Optimization Apparatus 3

Production Control Apparatus 2

Environmental Protection Device Control Apparatus 1

Production Device a

Production Device b

Production Device c

Environmental Protection Device A

Environmental Protection Device B

Environmental Protection Device C

FIG. 4

Learning Unit 30

Production Control Apparatus 2

Production Demand

Environmental Protection Device Control Apparatus 1

Data Obtaining Section 300

Reward Calculation Section 301

Action Value Function Updating Section 302

External Condition Obtaining Unit 34

External Condition

Learning Result Storage Section 32

Optimal Production Plan Determining Unit 31

Original Production Plan Provision Section 33

Production Plan Optimization Apparatus 3

FIG. 5

FIG. 6

```
                    ┌─────────────────┐
                    │ Learning starts │
                    └────────┬────────┘
                             │
                             ▼
                    ┌─────────────────┐     S101
                    │ Execute an      │
                    │ original        │
                    │ production plan │
                    └────────┬────────┘
                             │
                             ▼
                    ┌──────────────────────┐     S102
                    │ Obtain the           │
                    │ production-related   │
                    │ information, the     │
                    │ environmental        │
                    │ protection device    │
                    │ operation            │
                    │ information, and the │
                    │ production demand    │
                    │ information          │
                    └────────┬─────────────┘
                             │
                             ▼
                    ┌─────────────────┐     S103
                    │ Calculate a cost│
                    │ of electricity  │
                    │ of a production │
                    │ plan as a cost  │
                    │ of the          │
                    │ production plan │
                    └────────┬────────┘
```

Cost decreases ◄─── How cost changes? S104 ───► Cost increases

S105    Cost remains unchanged S106                    S107

| Reward increases | Reward remains unchanged | Reward decreases |

Action value function is updated   S108

Satisfy the learning end condition?   S109   —— No

Yes

Learning ends

Execute a next production plan   S110

FIG. 7

Learning starts

Execute an original production plan — S101

Obtain the production-related information, the environmental protection device operation information, the production demand information, and the maintenance period of the environmental protection device — S111

Calculate a cost of electricity — S103

Calculate the maintenance cost of the environmental protection device — S112

Cost of Production Plan = Cost of Electricity + Maintenance Cost of Environmental Protection Device — S113

S104
How cost changes?

Cost decreases | Cost increases | Cost remains unchanged

S110
Execute a next production plan

Reward increases — S105

Reward remains unchanged — S106

Reward decreases — S107

Action value function is updated — S108

S109
Satisfy the learning end condition? — No

Yes

Learning ends

FIG. 8

Production Demand

Production Plan Optimization System 100'

Production Plan
Optimization Apparatus
3'

Supply Device
4

Production Control
Apparatus
2

Environmental Protection
Device Control Apparatus
1

Production Device a

Production Device b

Production Device c

Environmental
Protection Device A

Environmental
Protection Device B

Environmental
Protection Device C

FIG. 9

FIG. 10

| Supply Device | Action Time | Supply Quantity | Device Action | Supply Device Resource |
| --- | --- | --- | --- | --- |
| | | | | Electricity |
| Compressed Air Supply Device | 2019/09/01 07:00 | --- | Start | 50kwh |
| | 2019/09/01 08:00 | --- | Start | 50kwh |
| | 2019/09/01 09:00 | 230L | Compression Processing | 100kwh |
| | 2019/09/01 10:00 | 460L | Compression Processing | 100kwh |
| | 2019/09/01 11:00 | 310L | Compression Processing | 100kwh |
| | 2019/09/01 12:00 | 80L | Compression Processing | 100kwh |
| | 2019/09/01 12:00 | --- | End Processing | 50kwh |
| | 2019/09/01 13:00 | --- | End Processing | 50kwh |
| | 2019/09/01 14:00 | --- | Stop | --- |

FIG. 11

| Production Process | Consumption Resources | | | | | Inventory Management Resource |
|---|---|---|---|---|---|---|
| | Screw | Air | Paint | Electricity | Operator | Custody Management Resource |
| Process 1 | 0 Screw | 300L | 600L | 517kwh | 4h | 0 Custody Management Resource |
| Process 2 | 0 Screw | 240L | 480L | 493kwh | 5h | 0 Custody Management Resource |
| Assemble 1 | 600 Screws | 300L | 0L | 517kwh | 4h | 0 Custody Management Resource |
| Assemble 2 | 600 Screws | 240L | 0L | 493kwh | 5h | 0 Custody Management Resource |
| Check 1 | 0 Screw | 0L | 0L | 200kwh | 4h | 3000 Custody Management Resource |
| Check 2 | 0 Screw | 0L | 0L | 300kwh | 5h | 3600 Custody Management Resource |

FIG. 12

| Expenditure Item | Cost | Cost Classification | Note |
|---|---|---|---|
| Screw | 10 Yen per Screw | Material Cost | |
| Air | 0 Yen | Energy Cost | |
| Paint | 5 Yen/L | Material Cost | |
| Electricity | 12 Yen/kwh | Energy Cost | |
| Operator | 1000 Yen/h | Labor Cost | |
| Inventory Management | 2 Yen/Operating Hour | Inventory Management Cost | |

FIG. 13

| Production Process | Consumption Resources | | | | | Inventory Management Resource |
| --- | --- | --- | --- | --- | --- | --- |
| | Screw | Air | Paint | Electricity | Operator | Custody Management Resource |
| Process 1 | 0 Yen | 0 Yen | 3000 Yen | 6204 Yen | 4000 Yen | 0 Yen |
| Process 2 | 0 Yen | 0 Yen | 2400 Yen | 5916 Yen | 5000 Yen | 0 Yen |
| Assemble 1 | 6000 Yen | 0 Yen | 0 Yen | 6204 Yen | 4000 Yen | 0 Yen |
| Assemble 2 | 6000 Yen | 0 Yen | 0 Yen | 5916 Yen | 5000 Yen | 0 Yen |
| Check 1 | 0 Yen | 0 Yen | 0 Yen | 2400 Yen | 4000 Yen | 8612 Yen |
| Check 2 | 0 Yen | 0 Yen | 0 Yen | 3600 Yen | 5000 Yen | 9812 Yen |

FIG. 14

| Production Process | Material | Energy | Inventory Management | Total |
|---|---|---|---|---|
| Process 1 | 467 | 414 | 0 | 1099 |
| Process 2 | 617 | 493 | 0 | 1391 |
| Assemble 1 | 667 | 414 | 0 | 1277 |
| Assemble 2 | 917 | 493 | 0 | 1655 |
| Check 1 | 267 | 160 | 574 | 1110 |
| Check 2 | 417 | 300 | 818 | 1739 |
| Total | 3350 | 2273 | 1392 | 8272 |

FIG. 15

## INTERNATIONAL SEARCH REPORT

| International application No. |
| --- |
| **PCT/CN2020/137063** |

| **A.** | **CLASSIFICATION OF SUBJECT MATTER** |
| --- | --- |

G05B 19/418(2006.01)i;  G06Q 10/04(2012.01)i

According to International Patent Classification (IPC) or to both national classification and IPC

| **B.** | **FIELDS SEARCHED** |
| --- | --- |

Minimum documentation searched (classification system followed by classification symbols)

G05B;G06Q

Documentation searched other than minimum documentation to the extent that such documents are included in the fields searched

Electronic data base consulted during the international search (name of data base and, where practicable, search terms used)

CNPAT, CNKI, WPI, EPODOC: 环保, 废气, 工业, 生产, 环境, 调整, 频率, 变频, 功率, 开关, 控制, 能耗, 功耗, 消耗, 计划, 成本, 学习, 建模, 模拟器, 三菱电机, 薛斌杰, entironment, protect, waste, gas, VOC, exhaust, product, adjust, modify, power, frequency, converse, change, switch, control, consume, save, energy, cost, plan, study, learn, modeling, simulator, MITSUBISHI, XUE Binjie

| **C.** | **DOCUMENTS CONSIDERED TO BE RELEVANT** | |
| --- | --- | --- |
| Category* | Citation of document, with indication, where appropriate, of the relevant passages | Relevant to claim No. |
| X | CN 111077808 A (SHENZHEN QIANHAI TIDE ENVIRONMENTAL PROTECTION TECHNOLOGY CO., LTD.) 28 April 2020 (2020-04-28) description, paragraphs 0001-0049, 0061-0130 and figures 1-3 | 1-3 |
| Y | CN 111077808 A (SHENZHEN QIANHAI TIDE ENVIRONMENTAL PROTECTION TECHNOLOGY CO., LTD) 28 April 2020 (2020-04-28) description, paragraphs 0001-0049, 0061-0130 and figures 1-3 | 4-9 |
| Y | CN 111108454 A (HITACHI, LTD.) 05 May 2020 (2020-05-05) description, paragraphs 0001-0013, 0026-0136 and figures 1-12 | 4-15 |
| Y | CN 104977911 A (NORTHEASTERN UNIVERSITY) 14 October 2015 (2015-10-14) description, paragraphs 0001-0058, 0063-0141 and figures 1-3 | 5-15 |
| A | CN 206285661 U (HARNLIR (QINGDAO) ENVIRONMENTAL PROTECTION TECHNOLOGY CO., LTD.) 30 June 2017 (2017-06-30) entire document | 1-15 |
| A | CN 106228257 A (CISDI ENGINEERING CO., LTD.) 14 December 2016 (2016-12-14) entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2021** | **30 August 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/137063** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2001027905 A (MATSUSHITA ELECTRIC INDUSTRIAL CO., LTD.) 30 January 2001 (2001-01-30)<br>　　entire document | 1-15 |

Form PCT/ISA/210 (second sheet) (January 2015)

**INTERNATIONAL SEARCH REPORT**
Information on patent family members

International application No.

**PCT/CN2020/137063**

| Patent document cited in search report | | | Publication date (day/month/year) | Patent family member(s) | | | Publication date (day/month/year) |
|---|---|---|---|---|---|---|---|
| CN | 111077808 | A | 28 April 2020 | None | | | |
| CN | 111108454 | A | 05 May 2020 | JP | 6811703 | B2 | 13 January 2021 |
| | | | | WO | 2019130712 | A1 | 04 July 2019 |
| | | | | JP | 2019117454 | A | 18 July 2019 |
| CN | 104977911 | A | 14 October 2015 | CN | 104977911 | B | 19 September 2017 |
| CN | 206285661 | U | 30 June 2017 | None | | | |
| CN | 106228257 | A | 14 December 2016 | None | | | |
| JP | 2001027905 | A | 30 January 2001 | None | | | |

Form PCT/ISA/210 (patent family annex) (January 2015)